(19) Europäisches Patentamt
European Patent Office
Office européen des brevets

(11) **EP 1 739 390 B1**

(12) **EUROPÄISCHE PATENTSCHRIFT**

(45) Veröffentlichungstag und Bekanntmachung des Hinweises auf die Patenterteilung:
**19.03.2008   Patentblatt 2008/12**

(51) Int Cl.:
***G01B 21/26*** *(2006.01)*

(21) Anmeldenummer: 06116270.7

(22) Anmeldetag: **29.06.2006**

(54) **Verfahren zur Ermittlung des Nachlaufs bei lenkbaren Achsen und zugehörige Vorrichtung**

Method and device for caster measurement

Procédé et dispositif pour mesurer l'angle de chasse

(84) Benannte Vertragsstaaten:
**DE FR IT SE**

(30) Priorität: **29.06.2005   DE 102005030369**

(43) Veröffentlichungstag der Anmeldung:
**03.01.2007   Patentblatt 2007/01**

(73) Patentinhaber: **SIEMENS AKTIENGESELLSCHAFT
80333 München (DE)**

(72) Erfinder:
• **Jodoin, Thomas
91126 Schwabach (DE)**

• **Pförtner, Andreas Dr.
90587 Veitsbronn (DE)**

(56) Entgegenhaltungen:
**EP-A- 1 262 742          US-A- 5 218 556**

• **DANIEL B. JANUARY, HUNTER ENGINEERING CO, BRIDGETON, MO, USA: "STEERING GEOMETRY AND CASTER MEASUREMENT" SAE TECHNICAL PAPER SERIES, Nr. 850219, 1985, Seiten 1-10, XP008068693 WARRENDALE, PA, USA**

EP 1 739 390 B1

**Beschreibung**

Die Erfindung betrifft ein Verfahren zur Ermittlung des Nachlaufs bei lenkbaren Achsen und eine Vorrichtung zur Anwendung des Verfahrens.

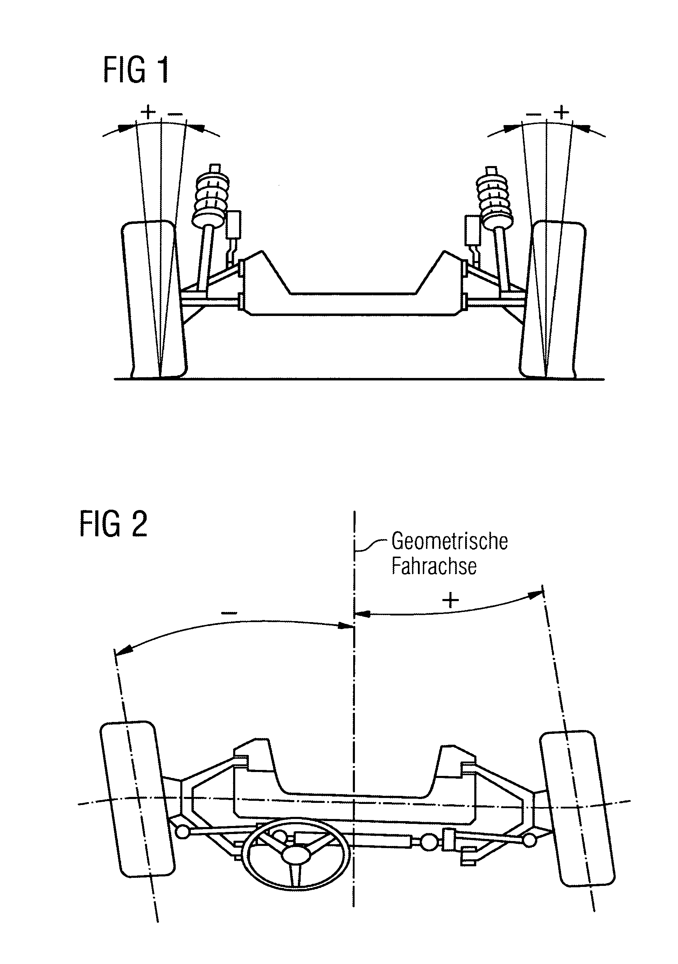

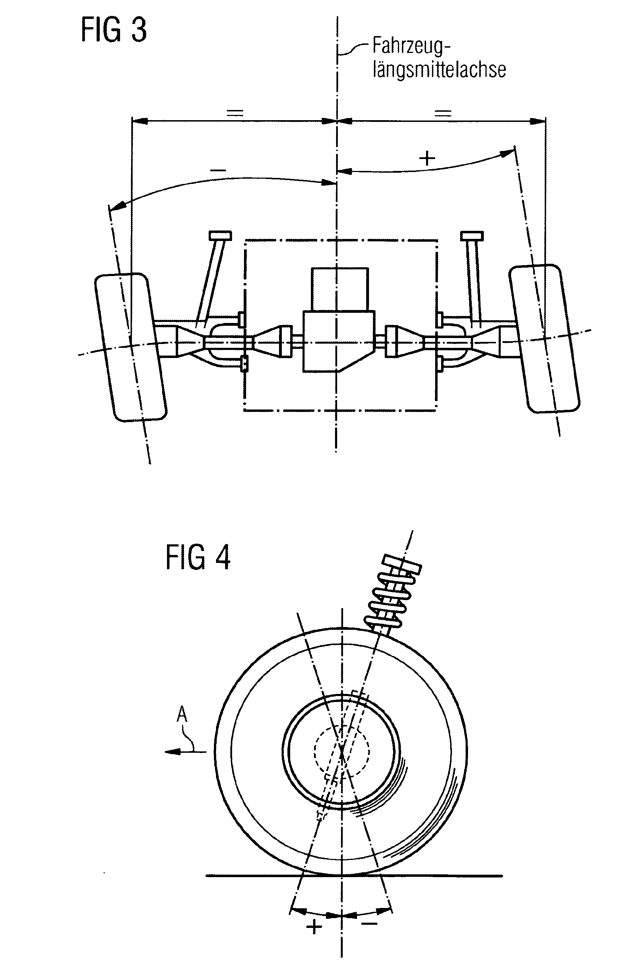

Bei der Vermessung der Achsgeometrie von Fahrzeugen ist neben der Spur und dem Sturz auch der Nachlauf ein wichtiger Parameter, der während der Qualitätskontrolle am Ende der Fabrikation oder in Werkstätten überprüft und eventuell eingestellt werden muss. Unter dem Sturz versteht man den Winkel zwischen Radebene und einer Ebene, die senkrecht zur Standebene des Fahrzeugs und parallel zu dessen Längsachse gemäß FIG 1 verläuft, wobei die Räder die Geradeausstellung einnehmen. Mit Spur wird der Winkel zwischen der Fahrachse und der Schnittlinie der Radmittelebene mit der Fahrbahnebene gemäß den Figuren 2 und 3 bezeichnet. Er ist positiv, wenn der vordere Teil des Rades der Fahrzeugmittelachse zugeneigt ist (FIG 2). Der Nachlauf ist der Winkel zwischen der Senkrechten vom Radmittelpunkt auf die Fahrbahnebene und der Achse, um die sich das Rad beim Lenken dreht (siehe FIG 4). Liegt der Auftreffpunkt dieser Achse in Fahrzeugrichtung gemäß Pfeil A vor der Senkrechten Radmittelpunkt auf die Fahrbahnebene, dann ist der Nachlauf positiv. Spur und Sturz können mit verschiedenen taktilen und optischen Verfahren direkt gemessen werden. Der Nachlauf ist nicht direkt zugänglich, er lässt sich aber über Spur- und Sturzmessungen berechnen. Für die Vermessung des Nachlaufs werden bisher in zwei symmetrischen Lenkeinschlagpositionen, üblicherweise $\pm$ 5°, Spur und Sturz gemessen und aus diesen vier Werten der Nachlauf berechnet. Die Geometrie einer lenkbaren Achse lässt sich im Bezug auf den Nachlauf durch folgende Gleichung beschreiben (siehe z.B. "Steering geometry and caster measurement" durch D.B. January, SAE Technical Paper Series, 850 219, 1985):

$$\sin C = (\cos C_0 - \cos C \cos T) \tan S - \cos C \sin T \tan K + \sin C_0$$

wobei

C = Sturz
$C_0$ = Sturz bei Spur = 0°
K = Nachlauf
S = Steigung der Lenkachse
T = Spur

Der Nachlauf K kann durch die Näherung cos C = 1 und für zwei Spur(Lenk)-Einstellungen $T_2 = T_1$ einfacher berechnet werden und ergibt sich zu

$$K = \arctan\left(\frac{\sin C_1 - \sin C_2}{\sin T_2 - \sin T_1}\right)$$

Dabei müssen $T_2$, $T_1$, $C_1$ und $C_2$ gemessen werden.

Gemäß dieser Methode wird der Nachlauf aus nur vier Messwerten, nämlich zwei Spur- und zwei Sturzwerten errechnet. Aufgrund dessen ist das Ergebnis mit einer großen Unsicherheit von ca. zehn Winkelminuten behaftet. Diese Messgenauigkeit reicht aber für die geforderte Messsicherheit von einer Winkelminute aus der Automobilbranche nicht aus. Nur durch zahlreiche Wiederholungsmessungen könnte die geforderte Genauigkeit erreicht werden, was allerdings einen erhöhten Aufwand zur Folge hat.

Der Erfindung liegt daher die Aufgabe zugrunde, ein Verfahren zur Ermittlung des Nachlaufs bei lenkbaren Achsen anzugeben, mit dem der Nachlauf mit hoher Messsicherheit ermittelbar ist. Zugleich ist es Aufgabe der Erfindung, eine Vorrichtung zur Ermittlung des Nachlaufs bei lenkbaren Achsen unter Anwendung des Verfahrens anzugeben.

Die erste Aufgabe wird durch ein Verfahren zur Ermittlung des Nachlaufs bei lenkbaren Achsen in folgenden Schritten gelöst:

a) Messung von mehr als zwei Sturz/Spur-Wertepaaren,
b) Ermittlung der Sturz/Spur-Kurve durch Bildung eines Polynom n-ten Grades aus den Sturz/Spur-Wertepaaren,
c) Berechnung $C_1$, $C_2$, $T_1$, $T_2$ bei bestimmten Lenkeinschlagpositionen, vorzugsweise $\pm$ 5°,
d) Berechnung des Nachlaufs K, vorzugsweise gemäß

$$K = \arctan\left(\frac{\sin C_1 - \sin C_2}{\sin T_2 - \sin T_1}\right)$$

Die weitere Aufgabe wird durch eine Vorrichtung zur Ermittlung des Nachlaufs bei lenkbaren Achsen gelöst, das ein Messsystem zur Aufnahme von mehr als zwei Sturz/Spur-Wertepaaren aufweist, das ein Rechenprogramm aufweist, dass aus den gemessenen Sturz/Spur-Wertepaaren den Nachlauf in folgenden Schritten berechnet:

a) Ermittlung der Sturz/Spur-Kurve durch Bildung eines Polynom n-ten Grades aus den Sturz/Spur-Wertepaaren,
b) Berechnung der Werte $C_1$, $C_2$, $T_1$, $T_2$ bei bestimmten Lenkeinschlagpositionen, vorzugsweise $\pm$ 5° und
c) Berechnung des Nachlaufs K, vorzugsweise nach

$$K = \arctan\left(\frac{\sin C_1 - \sin C_2}{\sin T_2 - \sin T_1}\right)$$

Ein Ausführungsbeispiel der Erfindung wird anhand einer Zeichnung im Folgenden näher erläutert. Es zeigen:

FIG 5 eine durch Messungen aufgenommene Sturz/Spur-Kurve und
FIG 6 eine erfindungsgemäße Vorrichtung.

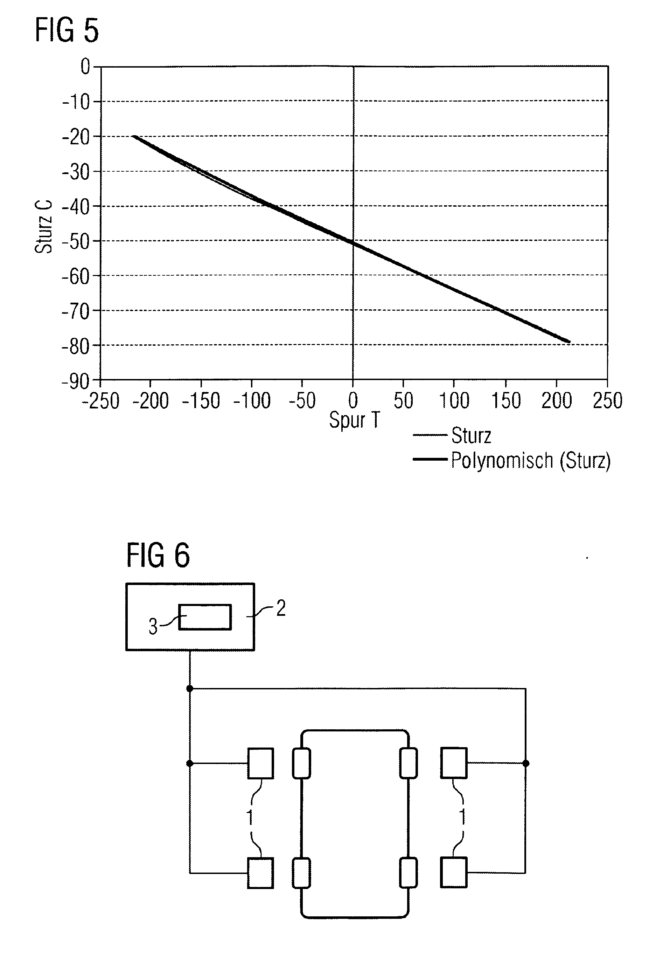

Durch ein optisches 3D-Verfahren wie es beispielsweise bei Siemens Fahrzeugeinstellprüfständen eingesetzt wird, ist es möglich, während des Lenkeinschlags nahezu in Echtzeit Messwertpaare für Spur $T_n$ und Sturz $C_n$ zu erhalten. Bei der Nachlaufmessung beträgt der Lenkeinschlag üblicherweise $\pm$ 5°. Während eines Lenkzyklus (z.B. 0 $\rightarrow$ +5° $\rightarrow$ 0° $\rightarrow$ -5° $\rightarrow$ 0), der vom Werker oder einer Maschine durchgeführt wird, wird eine Sturz/Spur-Kurve gemäß FIG 5 aufgenommen. Durch die gemessenen Spurwerte $T_n$ bekommt der Werker oder die Maschine gleichzeitig ein direktes Feedback über den Einschlagwinkel. Ist der Lenkzyklus beendet, kann an den Sturz/Spur-Datensatz ein Polynom 2. Grades angefittet werden. Dies reicht für die Genauigkeit der Abbildung der Sturz/Spur-Kurve im Allgemeinen aus. Es wäre jedoch auch möglich ein Polynom höheren Grades, allgemein n-ten Grades falls erforderlich anzusetzen. Im vorliegenden Beispiel der Sturz/Spur-Kurve gemäß FIG 4 ergibt die Parabel einen Fehler bei einem Winkel von 5°, der kleiner als 0,03 % ist. Mit den Parametern der Parabel

$$y = 3.198E\text{-}05x^2 - 1.372E\text{-}01x - 5.112E\text{+}01$$

$$R^2 = 9.999E\text{-}01$$

lassen sich für zwei gewählte Spurwerte mit $T_2 = -T_1$ die zugehörigen Sturzwerte berechnen. Mit diesen beiden Sturz-Wertepaaren $C_1$, $T_1$ und $C_2$, $T_2$ kann der Nachlauf K gemäß

$$K = \arctan\left(\frac{\sin C_1 - \sin C_2}{\sin T_2 - \sin T_1}\right)$$

berechnet werden.
Der Vorteil dieser Methode liegt darin, dass nicht nur zwei gemessene Sturz/Spur-Wertepaare für die Berechnung des Nachlaufs K zugrunde gelegt werden, sondern ein Datensatz mit mehreren 100 Messwerten in die Berechnung eingeht. Im oben gezeigten Beispiel sind es ca. 350. Es ergibt sich dadurch ein großer Mittelungseffekt der sich günstig auf die Messunsicherheit auswirkt. Sie wird um einen Faktor $1/\sqrt{N}$ kleiner, wobei N die Anzahl der Messwerte ist. Die Folge ist, dass mit der oben beschriebenen Methode mit einer Messung eine Messunsicherheit erreicht werden kann, die mit der herkömmlichen Methode erst nach N/2 Messungen erreicht wird. Bei dieser Betrachtung wird vorausgesetzt, dass das gleiche Messsystem verwendet wird. Mit der beschriebenen Methode liegt die Messunsicherheit bei dem geforderten und theoretisch erwarteten Wert bei einer Winkelminute.

Ein weiterer wesentlicher Vorteil dieser Methode besteht darin, dass nicht exakt zwei identische Lenkeinschläge für links und rechts eingestellt werden müssen. Es genügt ein beliebiger Lenkeinschlag nach links und rechts im Rahmen der Vorgabe, wobei es auf $\pm 1°$ mehr oder weniger nicht ankommt. Dadurch folgt der weitere Vorteil, dass es praktisch keine Fehlbedienung bezüglich der eingestellten Lenkeinschläge gibt. Die Berechnung des Nachlaufs K nach obiger Gleichung liefert allerdings nur vernünftige Ergebnisse unter der Nebenbedingung, dass $T_2 = -T_1$.

Ein Ausführungsbeispiel der zur Erfindung gehörenden Vorrichtung wird anhand der FIG 6 im Folgenden näher erläutert. Die Vorrichtung umfasst ein Messsystem mit Sonden 1 an den Rädern einer lenkbaren Achse eines Fahrzeugs und einem mit dem Messsystem über eine Datenverbindung verbundenen Rechner 2, der ein Rechenprogramm 3 aufweist. Mit dem Messsystem wird eine Vielzahl von Sturz/Spur-Wertepaaren $C_n$, $T_n$ aufgenommen. Die Sturz/Spur-Wertepaaren werden im Rechenprogramm 3 verarbeitet. Das Rechenprogramm 3 berechnet aus den Sturz/Spur-Wertepaaren den Nachlauf K in folgenden Schritten:

a) Es wird die Sturz/Spur-Kurve durch Bildung eines Polynom n-ten Grades aus den Sturz/Spur-Wertepaaren ermittelt,
b) es werden die Werte $C_1$, $C_2$, $T_1$, $T_2$ bei bestimmten Lenkeinschlagpositionen, vorzugsweise $\pm 5°$, berechnet und
c) es wird der Nachlauf K nach

$$K = \arctan\left(\frac{\sin C_1 - \sin C_2}{\sin T_2 - \sin T_1}\right)$$

berechnet.

## Patentansprüche

1. Verfahren zur Ermittlung des Nachlaufs bei lenkbaren Achsen in folgenden Schritten:

a) Messung von mehr als zwei Sturz/Spur-Wertepaaren ($C_n$, $T_n$) während eines Lenkzyklus
b) Ermittlung der Sturz/Spur-Kurve durch Bildung eines Polynom n-ten Grades ($n \geq 2$) aus den gemessenen Sturz/Spur-Wertepaaren ($C_n$, $T_n$),
c) Berechnung von Sturz/Spur-Werten ($C_1$, $C_2$, $T_1$, $T_2$) bei bestimmten Lenkeinschlagpositionen, vorzugsweise $\pm 5°$ und
d) Berechnung des Nachlaufs (K) nach

$$K = \arctan\left(\frac{\sin C_1 - \sin C_2}{\sin T_2 - \sin T_1}\right)$$

2. Verfahren nach Anspruch 1 **dadurch gekennzeichnet, dass** mindestens 100 Sturz/Spur-Wertepaare ($C_n$, $T_n$) gemessen werden.

3. Vorrichtung zur Ermittlung des Nachlaufs bei lenkbaren Achsen mit einem Messsystem (1) zur Messung von mehr als zwei Sturz/Spur-Wertepaaren ($C_n$, $T_n$) während eines Lenkzyklus und mit einem Rechner (2) mit einem Rechenprogramm (3), das zur Berechnung des Nachlaufs (K) aus einer Vielzahl von Sturz/Spur-Wertepaaren ($C_n$, $T_n$) in folgenden Schritten dient:

a) Ermittlung der Sturz/Spur-Kurve durch Bildung eines Polynom n-ten Grades ($n \geq 2$) aus den gemessenen Sturz/Spur-Wertpaaren (Cn, Tn),
b) Berechung von Sturz/Spur-Werten (C1, C2, T1, T2) bei bestimmten Lenkeinschlagpositionen, vorzugsweise $\pm 5°$ und Berechnung des Nachlaufs (K) nach

$$K = \arctan\left(\frac{\sin C_1 - \sin C_2}{\sin T_2 - \sin T_1}\right)$$

## Claims

1. Method for determining the castor action with steerable axle in the follow steps:

   a) measuring more than two camber/tread width value pairs $(C_n, T_n)$ during a steering cycle
   b) determining the camber/tread width curve by forming an nth degree polynomial ($n \geq 2$) from the measured camber/tread width value pairs $(C_n, T_n)$,
   c) calculating camber/tread width values $(C_1, C_2, T_1, T_2)$ with specific steer angle positions, preferably $\pm 5°$ and
   d) calculating the castor action (K) according to

$$K = \arctan\left(\frac{\sin C_1 - \sin C_2}{\sin T_2 - \sin T_1}\right)$$

2. Method according to claim 1, **characterised in that** at least 100 camber/tread width value pairs $(C_n, T_n)$ are measured.

3. Device for determining the castor action with steerable axle having a measuring system (1) for measuring more than two camber/tread width value pairs $(C_n, T_n)$ during a steering cycle and having a computer (2) with a computing program (3), which is used to calculate the castor action (K) from a plurality of camber/tread width value pairs $(C_n, T_n)$ in the following steps:

   a) determining the camber/tread width curve by forming an nth degree polynomial ($n \geq 2$) from the measured camber/tread width value pairs $(C_n, T_n)$,
   b) calculating camber/tread width values $(C_1, C_2, T_1, T_2)$ with specific steer angle positions, preferably $\pm 5°$ and calculating the castor action (K) according to

$$K = \arctan\left(\frac{\sin C_1 - \sin C_2}{\sin T_2 - \sin T_1}\right)$$

## Revendications

1. Procédé pour déterminer l'angle de chasse dans le cas d'essieux directeurs, selon les étapes suivantes :

   a) mesure de plus de deux paires de valeurs carrossage/pincement $(C_n, T_n)$ pendant un cycle de direction,
   b) détermination de la courbe carrossage/pincement par la formation d'un polynome de $n^{\text{ième}}$ degré ($n \geq 2$) à partir des valeurs carrossage/pincement $(C_n, T_n)$ mesurées,
   c) calcul de valeurs carrossage/pincement $(C_1, C_2, T_1, T_2)$ dans le cas de positions de braquage de direction définies, de préférence $\pm 5°$ et
   d) calcul de la chasse (K) selon

$$K = \arctan\left(\frac{\sin C_1 - \sin C_2}{\sin T_2 - \sin T_1}\right)$$

**2.** Procédé selon la revendication 1, **caractérisé en ce que** au moins 100 paires de valeurs carrossage/pincement $(C_n, T_n)$ sont mesurées.

**3.** Dispositif pour déterminer la chasse dans le cas d'essieux directeurs, comprenant un système de mesure (1) pour la mesure de plus de deux paires de valeurs carrossage/pincement $(C_n, T_n)$ pendant un cycle de direction, et un calculateur (2) ayant un programme de calcul (3) qui sert à calculer la chasse (K) à partir d'un grand nombre de paires de valeurs carrossage/pincement $(C_n, T_n)$ selon les étapes suivantes :

a) détermination de la courbe carrossage/pincement par la formation d'un polynome de $n^{\text{ième}}$ degré ($n \geq 2$) à partir des valeurs carrossage/pincement $(C_n, T_n)$ mesurées,
b) calcul de valeurs carrossage/pincement (C1, C2, T1, T2) dans le cas de positions de braquage de direction définies, de préférence $\pm$ 5°, et calcul de la chasse (K) selon

$$K = \arctan\left(\frac{\sin C_1 - \sin C_2}{\sin T_2 - \sin T_1}\right)$$

FIG 1

FIG 2

Geometrische
Fahrachse

# FIG 3

Fahrzeuglängsmittelachse

$=$      $=$

$-$      $+$

# FIG 4

A

$+$     $-$

## FIG 5

## FIG 6

**IN DER BESCHREIBUNG AUFGEFÜHRTE DOKUMENTE**

**In der Beschreibung aufgeführte Nicht-Patentliteratur**

- **D.B. JANUARY.** *SAE Technical Paper Series,* 1985, vol. 850, 219